(19) Europäisches Patentamt

European Patent Office

Office européen des brevets

(11) Publication number: **0 460 163 B1**

(12) **EUROPEAN PATENT SPECIFICATION**

(45) Date of publication of patent specification: **08.02.95**　(51) Int. Cl.⁶: **F16F 9/46**

(21) Application number: **91901318.5**

(22) Date of filing: **21.12.90**

(86) International application number:
**PCT/GB90/02009**

(87) International publication number:
**WO 91/10077 (11.07.91 91/15)**

(54) **ADAPTIVE SHOCK ABSORBERS AND DAMPING VALVES THEREFOR.**

(30) Priority: **21.12.89 GB 8928943**

(43) Date of publication of application:
**11.12.91 Bulletin 91/50**

(45) Publication of the grant of the patent:
**08.02.95 Bulletin 95/06**

(84) Designated Contracting States:
**DE ES FR GB**

(56) References cited:
EP-A- 0 249 207　　EP-A- 0 263 346
FR-A- 2 588 343　　FR-A- 2 613 798
US-A- 3 977 649　　US-A- 4 725 039

(73) Proprietor: **MONROE EUROPE (UK) LIMITED**
**Manor Lane,**
**Shipton Road**
**York YO3 6UA (GB)**

(72) Inventor: **PEARCE, Paul, Towersey**
**17 Wenlock Drive**
**Escrick**
**York Y04 6JB (GB)**

(74) Representative: **W.P. THOMPSON & CO.**
**Kings Building,**
**South Church Side**
**Hull,**
**North Humberside HU1 1RR (GB)**

## Description

The present invention relates to adaptive shock absorbers of the kind which comprise a working cylinder divided by a working piston secured on a piston rod into two working chambers filled with damping fluid and which have damping or throttle valves in the working chamber and/or the working piston. More specifically, the present invention relates to adaptive shock absorbers according to the preamble of claim 1.

It is known from GB-A-2164723 to provide an adaptive shock absorber in which the damping characteristic can be adjusted by means of an adjustable damping valve incorporated in a bypass passage between the two working chambers of the adaptive shock absorber. The adjustable damping valve comprises a housing having a port in one of its end walls and at least one other opening, a valve member which is movable longitudinally within the damper valve housing under the control of an electromagnet and which co-operates with the port, and a pressure dependent spring loaded disc valve arranged co-axially and in series with the valve member. The valve member and the pressure dependent spring loaded disc valve control the flow of hydraulic fluid medium through the damper valve housing between the port and the other opening or openings, and hence regulate the flow of hydraulic fluid medium through the bypass passage of the adaptive shock absorber.

It will be understood that as the valve member is opened or closed it alters the piston rod force which the shock absorber exerts on the vehicle structure. As a consequence, the vehicle structure responds by radiating undesirable noise into the passenger compartment. The level of noise is dependent on the rate of change of piston rod force and hence, by decreasing the rate of change, the level of noise can be minimised.

One way of achieving this is to delay the operation of the valve member until the shock absorber piston velocity is very slow.

It is generally appreciated that a solution to the noise could be realised by attention to the control software which drives the longitudinally moveable valve member, but to achieve the same effect by this means requires the presence in the suspension system of an addtional transducer, to detect near-zero suspension velocity and further complicates the electronic controller.

It is also known from EP-A-0263346 to provide a two way fluid valve suitable for a vehicle suspension unit. This valve is intended for use between a vehicle hydraulic suspension unit and a pump and its purpose is to allow the operating pressure of the suspension unit to be raised or lowered. This valve comprises a valve body which regulates the flow of hydraulic fluid between the suspension unit and the pump, the design of which is such that it will only open when the pressure differential across it is at or almost zero. However, opening of the valve body is also dependent upon the operation of a solenoid operated pilot valve comprising a needle which engages in a pilot passage extending between the input and output sides of the valve body.

This arrangement allows for slow quiet discharges of hydraulic fluid from the suspension unit, quick charges of hydraulic fluid to the suspension unit and long periods of isolation of the hydraulic fluid in the suspension unit.

However, this is a relatively complex arrangement and because of this the valve is not suited to automatically adjusting the damping characteristic of an adaptive shock absorber in response to continuously changing road conditions. Nor, apparently, is it intended for this purpose. In this regard, the presence of the pilot valve would result in the valve being noisy and unable to respond at the operating frequencies which usually prevail under such conditions.

The object of the present invention is to provide an adaptive shock absorber which is provided with an adjustable damping valve for incorporation in the bypass passage, which, in use, will not switch from a high to a low setting, when the adaptive shock absorber is developing significant force.

According to the present invention there is provided an adaptive shock absorber comprising a working cylinder, a damping piston assembly disposed within the working cylinder and which divides the working cylinder into at least two chambers, each for containing hydraulic fluid, a damping valve through which hydraulic fluid can pass from one of said chambers to a reservoir, a bypass passage providing a fluid path alternative to the damping valve between the chambers of the working cylinder and the reservoir space, and an adjustable damping valve incorporated within the bypass passage for regulating the flow of hydraulic fluid in the bypass passage from the other one of said chambers to the reservoir, which adjustable damping valve comprises at least one inlet through which hydraulic fluid enters the adjustable damping valve, an outlet through which it exits the adjustable damping valve, a controllable valve having a valve member which controls the flow of hydraulic fluid through the adjustable damping valve between the said at least one inlet and the said outlet, and actuating means responsive to a control signal for exerting an opening force on the valve member, characterised in that the valve member is adapted such that when it is closed, so that effectively no hydraulic fluid flows through the adjustable damping valve, pressure in the hydraulic fluid developed by the piston assembly results in a pressure drop across the valve member, which pressure drop exerts a closing force on the valve member in opposition to the opening force exerted by the control signal and causes the valve member to remain closed until the pressure drop across it falls below a predetermined threshold level, thereby delaying the response of the controllable valve to the control signal until the pressure developed by the piston assembly drops below a predetermined threshold.

Thus, the adjustable damping valve will switch from a high to a low setting only when the pressure developed by the damping piston falls to an insignificant level.

The force threshold at which the controllable valve opens is given by the following equation:

$$\text{F threshold} = \left(\frac{Fsol - Fsp}{\text{orifice area}} \times \frac{\text{working surface area}}{\text{of the damping piston}}\right)$$

where

Fsol is the force required to open the controllable valve
and,

Fsp is the restoration bias which biases the controllable valve towards a closed position.

Preferably the controllable valve comprises a valve member which is moveable against resilient biasing means urging it into co-operation with a port or orifice.

Preferably, the controllable valve is controlled by an electromagnet which is both simple and economical to implement. Conveniently, the armature of the electromagnet comprises the valve member. However, it may also be controlled by pneumatic or hydraulic actuators, flexible cables, or any other convenient control means.

In the case of an electromagnetically controlled valve the force (Fsol) acting to open the controllable valve is determined in particular by the magnetic circuit efficiency the current in the electromagnet, the cross-sectional area of the valve member and the valve member lift.

By appropriate selection of the design parameters for the controllable valve it is possible to adjust the force threshold at which it switches from a high setting to a low setting so that it only occurs when the damping piston ceases to develop significant force. In practice, this means that no downward switching takes place (that is to say from a high setting to a low setting) until the damping piston velocity has fallen to a value approaching zero. It follows from this that there will be no significant force at the point of attachment of the adaptive shock absorber to the vehicle when the damping piston velocity is insignificant.

It will be understood that the adjustable damping valve operates as described hereinbefore when the damping piston is moving in either the upward (rebound) or the downward (compressive) direction, whenever switching from a higher to a lower setting is selected. The fact that switching is being delayed does not matter from the viewpoint of suspension control when switching from a high to a lower setting.

Preferably, a control valve is provided immediately downstream of the controllable valve and is adapted to have a pressure versus flow characterstic to suit the control requirements of the vehicle. The control valve may take the form of a poppet valve. This is spring biased towards a closed position and opens only when the pressure across it exceeds a predetermined level, when it imposes a pressure drop related to the damping piston velocity by the control requirements of the vehicle. However, it is envisaged that the control valve could also take the form of an orifice. It will be understood that the control valve must be located downstream of the controllable valve because it is, of course, essential that the pressure upstream of the controllable valve holds the valve member thereof against its seat. Should the control valve be placed upstream of the controllable valve it would trap pressure between itself and the controllable valve and prevent the controllable valve lifting from its seat.

The adjustable damping valve differs from conventional damping valves in that it is deliberately designed so as to be held down by the pressure developed in the hydraulic fluid by the damping piston. Only when this has dropped below the threshold set by the design parameters outlined above will the controllable valve open to allow switching from a high to a low setting. Conventional damping valves are usually balanced inasmuch as the valve member is designed so that the upstream end thereof is exposed to the same pressure as the downstream end (usually a through bore is provided from one end of the valve member to the other), and as a consequence the valve has little tendency to move in either direction.

The adjustable damping valve may be arranged in parallel with the conventional damping or throttle valves in the damping piston and/or in the base of the adaptive shock absorber. Another possibility is that the adjustable damping valve may be arranged in a lockable adaptive shock absorber without conventional damping valves being present in the damping piston or in the base of the cylinder.

The adjustable damping device can be used in twin tube shock absorbers, including McPherson struts and semi-struts, and in monotube shock absorbers.

An embodiment of the present invention will now be described, by way of example, with reference to the accompanying drawings, in which:-

Fig. 1 is a longitudinal section through a twin tube adaptive shock absorber comprising an adjustable damping valve; and

Fig. 2 is a section through an adjustable damping valve.

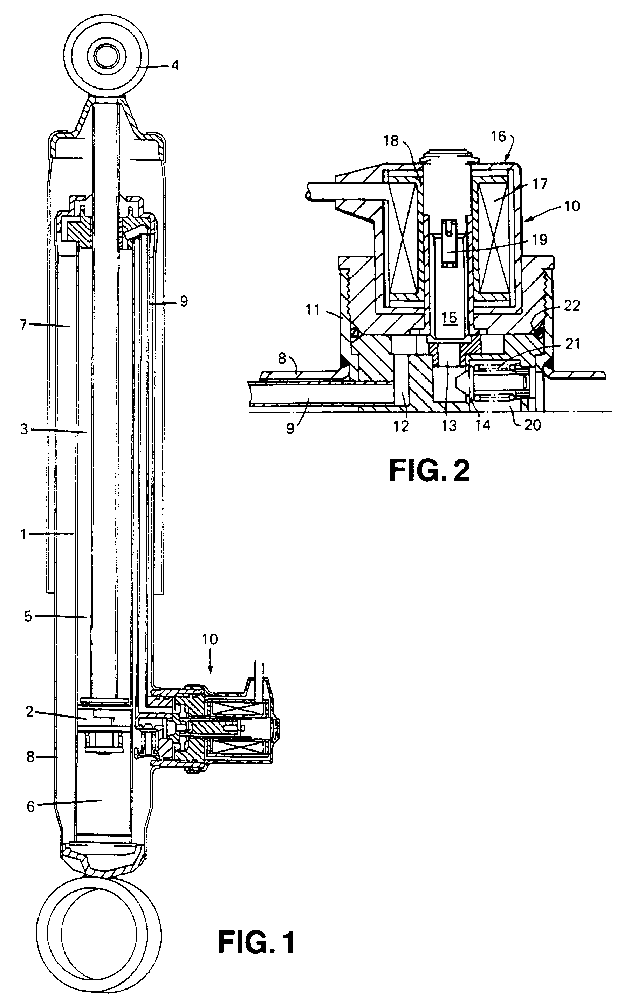

The twin tube adaptive shock absorber shown in Fig. 1 is a suspension unit for use in a vehicle suspension system. The adaptive shock absorber comprises a working cylinder 1 and a damping piston 2 carried by a piston rod 3. The free end 4 is adapted, in use, to be secured to one part of a vehicle, for example, the vehicle body. Similarly, the working cylinder 1 is adapted, in use, to be secured to a second part of a vehicle, for example, a vehicle suspension member. The damping piston 2 is arranged for sliding movement within the working cylinder 1 and divides the working cylinder 1 into an upper working chamber 5 and a lower working chamber 6. The damping piston 2 is further provided with one or more damping valves (not shown) which allow hyraulic fluid medium to flow from the lower working chamber 6, in front of the damping piston 2, to the upper working chamber 5, on each downward stroke of the damping piston 2. Arranged in the base of the working cylinder 1 is one or more further damping valves (not shown), through which hydraulic fluid medium displaced by the damping piston 2 on its downward stroke, and not passing back into the upper working chamber 5 through the valves in the damping piston 2, is forced into a reservoir space 7 which is formed between the working cylinder 1 and an outer casing 8.

The upper working chamber 5 is also connected to the reservoir space 7 through a bypass passage 9 and an adjustable damping valve 10 which will now be described in greater detail with reference to Fig. 2 of the accompanying drawings.

Fig. 2 is a section through an adjustable damping valve 10 which is incorporated in the bypass passage 9 of a twin tube adaptive shock absorber. The adjustable damping valve 10 comprises an outer housing 11 which is adapted, in use, to be secured in the outer casing 8 of the adaptive shock absorber. In use, hydraulic fluid medium enters the adjustable damping valve 10 through a feed bore 12 which is aligned with the bypass passage 9 and flows through a port or orifice 13, past a spring loaded poppet valve 14, and into the reservoir space 7 of the adaptive shock absorber through a port 20 in the forward end of the adjustable damping valve 10. The port 13 can be closed by an axially moveable valve member 15 which forms the armature of, and is therefore controlled by, an electromagnet 16 which also comprises a coil 17. A restoring spring 19 exerts a permanent force on the valve member 15 so that when the electromagnet 16 is de-energised the valve member 15 is biased towards the port 13 to close same. The spring loaded poppet valve 14 is biased towards a normally closed position by means of a spring 21. A seal 22 prevents hydraulic fluid medium from leaking out between the damper valve 10 and the outer casing 8.

It will be understood that for the valve member 15 to open to allow hydraulic fluid medium to flow through the port 13;

$$F_{sol} > F_{resid},$$

where,

$F_{sol}$ is the force acting to pull the valve member away from the port and is determined in particular by the current in the electromagnet, the cross-sectional area of the valve member and the valve member lift

and

$F_{resid}$ is the residual force pushing the valve member against the port and is determined by the piston force (in rebound or compression), the cross-sectional area of the annular space 5 (annular area) in rebound or of the piston rod 3 in compression, the cross-sectional area of the port (orifice area), and the force exerted by the restoring spring ($F_{sp}$)

such that

$$Fresid = \frac{\underline{Piston\ force}}{Annulus\ area} \times orifice\ area + Fsp$$

for the rebound phase, or

$$Fresid = \frac{\underline{Piston\ force}}{Annulus\ area} \times orifice\ area + Fsp$$

for the compression phase

If Fresid exceeds Fsol then the valve member 15 will not open. Since Fresid is proportional to the piston force it follows that at very high piston forces the valve member 15 will remain shut, thereby keeping the damping valve on the highest setting until the piston force drops to the point where Fresid < Fsol and the valve member 15 can open. The delay in switching from the higher setting (valve member 15 closed) to the lower setting (valve member 15 open) is advantageous, for it is the transition from higher setting to lower setting at high piston forces which gives rise to the greatest damper switching noise. By ensuring that the valve member 15 only switches when the piston force drops below a predetermined threshold, damper switching noise is much reduced.

The use of a force threshold for hard (high) to soft (low) damper changes has little, if any, effect on the operation of the adaptive shock absorber for the change from high to low setting is only a return to normal operation after control has been applied. Rapid damper valve operation is only required in the change from low to hard setting, that is to say, soft to hard suspension, and since this is actually aided by oil flow it occurs much more effectively at high piston forces.

By rearrangement of the equations given hereinabove it is possible to arrive at the equation for the threshold at which Fsol equals Fresid. This is

$$F\ threshold\ (compression) =$$

$$\frac{(\underline{Fsol\ -\ Fsp})}{orifice\ area} \times (work\ area\ of\ the\ damper\ piston\ -\ the\ cross\text{-}sectional\ area\ of\ the\ piston\ rod)$$

or,

$$F\ threshold\ (rebound) = \frac{(\underline{Fsol\ -\ Fsp})}{orifice\ area} \times rebound\ annulus\ of\ damper$$

It follows from the formula given above that by varying the force of the restoring spring and/or the valve member pull force, the required force threshold can be set for high to low switching and also to give the fastest low to high switch time.

In the context of the valve calculation, it should be understood that the orifice area is already fixed by the needs of the shock absorber setting and so it is not a variable in this calculation. It has to appear in the calculation because it will vary between one vehicle application and another, necessitating the electromagnetic force and possibly the spring force to change in sympathy.

The adjustable damping valve provides an improved response speed when closing as a consequence of responding to the pressure drop across it. This is due to the pressure accelerating the valve plunger towards the seat. This pressure, and therefore the improvement in response speed, is proportional to the piston velocity, because the higher the velocity the greater is the pressure across the valve; and the increasing response speed with respect to damper velocity is an important advantage in many control strategies.

## Claims

1. An adaptive shock absorber comprising a working cylinder (1), a damping piston assembly (2, 3) disposed within the working cylinder (1) and which divides the working cylinder (1) into at least two chambers (5, 6), each for containing hydraulic fluid, a damping valve through which hydraulic fluid can pass from one (6) of said chambers to a reservoir space (7), a bypass passage (9) providing a fluid path alternative to the damping valve between the chambers (5,6) of the working cylinder (1) and the reservoir space (7), and an adjustable damping valve (10) incorporated within the bypass passage (9) for regulating the flow of hydraulic fluid in the bypass passage (9) from the other one (5) of said two chambers (5, 6) to the reservoir (7) which adjustable damping valve (10) comprises at least one inlet (12) through which hydraulic fluid enters the adjustable damping valve (10), an outlet (20) through which it exits the adjustable damping valve (10), a controllable valve having a valve member (15) which controls the flow of hydraulic fluid through the adjustable damping valve (10) between the said at least one inlet (12) and the said outlet (20), and actuating means (16, 17) responsive to a control signal for exerting an opening force on the valve member (15), characterised in that the valve member (15) is adapted such that when it is closed, so that effectively no hydraulic fluid flows through the adjustable damping valve (10), pressure in the hydraulic fluid developed by the piston assembly (2, 3) results in a pressure drop across the valve member (15), which pressure drop exerts a closing force on the valve member (15) in opposition to the opening force exerted by the control signal and causes the valve member (15) to remain closed until the pressure drop across it falls below a predetermined threshold level, thereby delaying the response of the controllable valve to the control signal until the pressure developed by the piston assembly (2, 3) drops below a predetermined threshold.

2. The adaptive shock absorber according to claim 1, wherein the said valve member (15) of the controllable valve is movable against resilient biasing means (18) urging it into co-operation with a port or orifice (13).

3. The adaptive shock absorber according to claim 1 or 2, wherein the controllable valve is controlled by an electromagnet (16).

4. The adaptive shock absorber according to claim 3, wherein the electromagnet (16) comprises an armature and that the armature comprises the said valve member (15).

5. The adaptive shock absorber according to any preceding claim wherein a control valve (14) is provided immediately downstream of the controllable valve.

6. The adaptive shock absorber according to claim 5, wherein the control valve comprises a poppet valve (14).

7. The adaptive shock absorber according to any preceding claim, wherein pressure upstream of the controllable valve accelerates it towards a closed condition.

## Patentansprüche

1. Regelbarer Stoßdämpfer, umfassend einen Arbeitszylinder (1), eine Dämpfungszylinderbaugruppe (2, 3), die innerhalb des Arbeitszylinders (1) angeordnet ist und den Arbeitszylinder (1) in wenigstens zwei Kammern (5, 6) jeweils zur Aufnahme von Hydraulikflüssigkeit unterteilt, ein Dämpfungsventil, durch das Hydraulikflüssigkeit von einer (6) der genannten Kammern zu einem Behälterraum (7) fließen kann, einen Umgehungskanal (9), der einen Flüssigkeitsweg alternativ zu dem Dämpfungsventil zwischen den Kammern (5, 6) des Arbeitszylinders (1) und dem Behälterraum bildet, und ein justierbares, in dem Umgehungskanal (9) integriertes Dämpfungsventil (10) zum Regulieren des Flusses von Hydraulikflüssigkeit in dem Umgehungskanal (9) von der anderen (5) der genannten beiden Kammern (5, 6) zu dem Behälter (7), wobei das justierbare Dämpfungsventil (10) wenigstens einen Einlaß (12) aufweist, durch den Hydraulikflüssigkeit in das justierbare Dämpfungsventil (10) eintritt, einen Auslaß (20), durch den sie das justierbare Dämpfungsventil (10) verläßt, ein steuerbares Ventil mit einem Ventilelement (15), das den Fluß von Hydraulikflüssigkeit durch das justierbare Dämpfungsventil (10) zwischen dem genannten wenigstens einen Einlaß (12) und dem genannten Auslaß (20) regelt, und Betätigungsmittel (16, 17), die auf ein Steuersignal zum Ausüben einer Öffnungskraft auf das Ventilelement (15) reagieren, dadurch gekennzeichnet, daß das Ventilelement (15) so aufgebaut ist, daß, wenn es geschlossen ist, so daß effektiv keine Hydraulikflüssigkeit durch das justierbare Dämpfungsventil (10) fließt, durch die Kolbenbaugruppe (2, 3) aufgebauter Druck in der Hydraulikflüssigkeit über das Ventilelement (15) abfällt, und dieser Druckabfall übt eine Schließkraft auf das Ventilelement (15) gegen die durch das Steuersignal induzierte Öffnungskraft aus und bewirkt, daß das Ventilelement (15) geschlossen bleibt, bis der Druckabfall darin unter einen vorbestimmten Schwellenwert fällt, wodurch die Reaktion des steuerbaren Ventils auf das Steuersignal verzögert wird, bis der durch die Kolbenbaugruppe (2, 3) erzeugte Druck unter einen vorbestimmten Schwellenwert abfällt.

2. Regelbarer Stoßdämpfer nach Anspruch 1, wobei das genannte Ventilelement (15) des steuerbaren Ventils gegen ein elastisches Vorspannmittel (18) beweglich ist, um es in Zusammenwirkung mit einer Mündung oder Öffnung (13) zu drängen.

3. Regelbarer Stoßdämpfer nach Anspruch 1 oder 2, wobei das steuerbare Ventil durch einen Elektromagnet (16) gesteuert wird.

4. Regelbarer Stoßdämpfer nach Anspruch 3, wobei der Elektromagnet (16) einen Anker aufweist und wobei der Anker das genannte Ventilelement (15) umfaßt.

5. Regelbarer Stoßdämpfer nach einem der vorhergehenden Ansprüche, wobei ein Steuerventil (14) unmittelbar unterhalb des steuerbaren Ventils vorgesehen ist.

6. Regelbarer Stoßdämpfer nach Anspruch 5, wobei das Steuerventil ein Tellerventil (14) aufweist.

7. Regelbarer Stoßdämpfer nach einem der vorhergehenden Ansprüche, wobei der Druck oberhalb des steuerbaren Ventils dieses in Richtung auf einen geschlossenen Zustand beschleunigt.

**Revendications**

1. Amortisseur adaptable comprenant un cylindre moteur (1), un ensemble piston d'amortissement (2, 3) disposé à l'intérieur du cylindre moteur (1) et qui divise le cylindre moteur (1) en au moins deux chambres (5, 6), devant contenir chacune du fluide hydraulique, une soupape d'amortissement par laquelle le fluide hydraulique peut passer de l'une (6) desdites chambres à un espace réservoir (7), un passage de dérivation (9) fournissant un autre chemin de fluide vers la soupape d'amortissement entre les chambres (5, 6) du cylindre moteur (1) et l'espace réservoir (7), et une soupape d'amortissement réglable (10) incorporée à l'intérieur du passage de dérivation (9) pour réguler l'écoulement du fluide hydraulique dans le passage de dérivation (9) provenant de l'autre (5) desdites deux chambres (5, 6) vers le réservoir (7) laquelle soupape d'amortissement réglable (10) comprend au moins une admission (12) par laquelle le fluide hydraulique entre dans la soupape d'amortissement réglable (10), un orifice de sortie (20) par lequel il sort de la soupape d'amortissement réglable (10), une soupape contrôlable ayant un élément de soupape (15) qui commande l'écoulement du fluide hydraulique à travers la soupape d'amortissement réglable (10) entre ladite au moins une admission (12) et ledit orifice de sortie (20), et un moyen d'actionnement (16, 17) sensible à un signal de commande pour exercer une force d'ouverture sur l'élément de soupape (15), caractérisé en ce que l'élément de soupape (15) est adapté de sorte que lorsqu'il est fermé, de sorte qu'en fait aucun fluide hydraulique ne s'écoule par la soupape d'amortissement réglable (10), la pression dans le fluide hydraulique développée par l'ensemble piston (2, 3) résulte en une chute de pression aux bornes de l'élément de soupape (15), laquelle pression exerce une force de fermeture sur l'élément de soupape (15) en opposition à la force d'ouverture exercée par le signal de commande et force l'élément de soupape (15) à rester fermé jusqu'à ce que la chute de pression à ses bornes chute en dessous d'un niveau de seuil prédéterminé, retardant ainsi la réponse de la soupape contrôlable au signal de commande jusqu'à ce que la pression développée par l'ensemble piston (2, 3) chute en-dessous d'un seuil prédétermine.

2. Amortisseur adaptable selon la revendication 1, dans lequel ledit élément de soupape (15) de la soupape contrôlable peut être déplacé contre un moyen de charge préliminaire élastique (18) le poussant en coopération avec un port ou orifice (13).

**3.** Amortisseur adaptable selon la revendication 1 ou 2, dans lequel la soupape contrôlable est commandée par un électro-aimant (16).

**4.** Amortisseur adaptable selon la revendication 3, dans lequel l'électro-aimant (16) comprend une armature, et l'armature comprend ledit élément de soupape (15).

**5.** Amortisseur adaptable selon l'une quelconque des revendications précédentes, dans lequel une soupape de commande (14) est fournie immédiatement en aval de la soupape contrôlable.

**6.** Amortisseur adaptable selon la revendication 5, dans lequel la soupape de commande comprend une soupape à champignon (14).

**7.** Amortisseur adaptable selon l'une quelconque des revendications précédentes, dans lequel la pression en amont de la soupape contrôlable l'accélère vers une condition fermée.

**FIG. 2**

**FIG. 1**